Europäisches Patentamt

European Patent Office

Office européen des brevets

(11) Publication number: **0 208 931 B1**

# EUROPEAN PATENT SPECIFICATION

(45) Date of publication of patent specification: **27.05.92**

(51) Int. Cl.5: **H04N 5/782**, G11B 27/22

(21) Application number: **86108216.2**

(22) Date of filing: **16.06.86**

(54) PCM audio signal reproducing apparatus.

(30) Priority: **18.06.85 JP 132640/85**

(43) Date of publication of application:
**21.01.87 Bulletin 87/04**

(45) Publication of the grant of the patent:
**27.05.92 Bulletin 92/22**

(84) Designated Contracting States:
**AT DE FR GB NL**

(56) References cited:
**EP-A- 0 084 969**
**EP-A- 0 087 303**
**DE-A- 3 310 998**

(73) Proprietor: **SONY CORPORATION**
**7-35 Kitashinagawa 6-Chome Shinagawa-ku**
**Tokyo 141(JP)**

(72) Inventor: **Shibata, Masahiro**
**c/o SONY CORPORATION 7-35,**
**Kitashinagawa 6-chome**
**Shinagawa-ku Tokyo(JP)**
Inventor: **Tsujibayashi, Tatsuo**
**c/o SONY CORPORATION 7-35,**
**Kitashinagawa 6-chome**
**Shinagawa-ku Tokyo(JP)**
Inventor: **Sato, Hiroyuki**

**c/o SONY CORPORATION 7-35,**
**Kitashinagawa 6-chome**
**Shinagawa-ku Tokyo(JP)**
Inventor: **Machida, Yoshinori**
**c/o SONY CORPORATION 7-35,**
**Kitashinagawa 6-chome**
**Shinagawa-ku Tokyo(JP)**
Inventor: **Murakami, Daisuke**
**c/o SONY CORPORATION 7-35,**
**Kitashinagawa 6-chome**
**Shinagawa-ku Tokyo(JP)**
Inventor: **Ohgane, Yoko**
**c/o SONY CORPORATION 7-35,**
**Kitashinagawa 6-chome**
**Shinagawa-ku Tokyo(JP)**

(74) Representative: **Schmidt-Evers, Jürgen,**
**Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J. Schmidt-**
**Evers Dipl.-Ing. W. Melzer Steinsdorfstrasse**
**10**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an apparatus for reproducing an information signal comprising at least a digitized audio signal recorded in a plurality of successive tracks on a record medium, with the digitized audio signal being recorded in at least an overscan section of each track, comprising

transducer means for scanning the tracks to reproduce the information signal recorded in the plurality of successive tracks;

audio signal processing means for converting said digitized audio signal to an analog audio signal;

video signal processing means for processing a video signal of said information signal to produce an output video signal, said video signal being a composite color video signal having horizontal synchronising pulses and color burst signals;

switch means for supplying said information signal reproduced during scanning of the overscan section of each track to said audio signal processing means and for supplying said information signal during scanning a main section of each track to one of said audio signal processing means and said video signal processing means;

video signal detecting means for detecting said video signal component included in said information signal reproduced during scanning of main section of each track; and

audio signal detecting means for detecting said digitized audio signal included in said information signal produced during scanning of each track.

An apparatus with these features is disclosed in EP-A-0 084 969.

In US-A-4 542 419 a so-called 8 mm video tape recorder (VTR) with two rotary heads is disclosed, in which a tape is wounded around a rotary drum over a angular range of more than 180° (for example 210°), a video signal (180°) and a PCM audio signal (36°) with its time base compressed are recorded in time division manner on the tape. If the interval or area in which the video signal is recorded is divided equally by five to form five segments (sections) each having an interval of 36° in the rotation path of a rotary head, it is possible to use such segment areas as the PCM audio signal recording areas of six audio channels.

Upon reproducing, it is judged whether the tape is a video tape or a multi-channel PCM tape. If it is the PCM type, a monitor picture is cut off (muted). Accordingly, when the PCM audio signal is additionally recorded on a multi-channel PCM area (except the first channel) of the tape on which the video signal, for example, is recorded, a band-shaped noise bar corresponding to the PCM audio signal recording area appears on the picture screen. If it can be judged that the PCM audio signal is recorded on the multi-channel recording area, such a picture can be avoided by the muting.

As one of the methods for identifying a tape on which the PCM audio signal is recorded, as the multi-channel PCM recording, it is proposed that an identifying pilot signal (continuous wave) having a frequency of, for example, 228.748 kHz is recorded on the PCM audio signal recording area in a frequency multiplexed manner.

When such a tape on which the PCM audio signal is recorded as the manner of multi-channel PCM recording is reproduced and the video signal is not reproduced, if a muting circuit of a video signal reproducing circuit is operated to mute the video signal, it is useless that the presence or absence of a high frequency video signal is detected to thereby control the muting circuit. In other words, when the video signal is not recorded on the tape but the PCM audio signal is recorded on the tape, such state is mistaken as a case in which the video signal is recorded and so, the muting circuit of the video signal reproducing circuit can not be operated to mute the video signal.

It is an object of the present invention to provide an improved PCM audio signal reproducing apparatus which can prevent a PCM audio signal recorded in the multi-channel PCM area from being mistaken as a video signal.

According to one aspect of the present invention, there is provided an apparatus for reproducing an information signal, as stated above, in which video signal muting means are provided which mutes said output video signal produced from said video signal processing means in response to the output signal of said video signal detecting means and/or audio signal detecting means during scanning of each track.

Other objects, features and advantages of the present invention will become apparent from the following detailed description of preferred embodiments taken in conjunction with the accompanying drawings, throughout which like reference numerals designate like elements and parts.

Fig. 1 is a schematic representation showing a recording format of an 8 mm video tape recorder to which the present invention is applied;

Fig. 2 is a schematic representation showing an example of a signal band of the 8 mm video tape recorder;

Fig. 3 is a schematic representation showing an example of a PCM signal band;

Fig. 4 is a block diagram showing an embodiment of a signal reproducing system of a PCM audio signal reproducing apparatus according to this invention;

Fig. 5 is a block diagram showing other embodiment of the signal reproducing system of the PCM audio signal reproducing apparatus according to this invention;

Figs. 6A to 6D are respectively diagrams used to explain the effect of this invention; and

Fig. 7 is a block diagram showing a further embodiment of the signal reproducing system of the PCM audio signal reproducing apparatus according to this invention.

Firstly, the principle of the present invention will briefly be described below.

In an apparatus such as a video tape recorder (VTR) which reproduces a record medium on which a video signal or a PCM audio signal is recorded on discontinuous tracks, when the PCM audio signal is reproduced, a picture must be cut off (or muted) by muting a monitor output. Therefore, the above mentioned apparatus is constructed such that a muting circuit is controlled so as to be placed in a muting state by detecting a horizontal synchronizing signal, a vertical synchronizing signal and a chrominance signal of a video signal or a carrier signal of an FM (frequency-modulated) audio signal. Alternatively, it is possible that the muting circuit for the video signal is placed in the muting state by identifying an identifying (ID) pilot signal recorded together with a multi-PCM audio signal on the tape.

In the preferred embodiments, when the synchronizing signal in the video signal is not detected continuously over several field periods and an identifying signal recorded together with the multi-PCM audio signal is detected continuously over several field periods, the muting circuit for the video signal is operated to mute the video signal.

Further, it may be possible that whether or not the PCM audio signal is recorded on the record medium is judged not by using the presence or absence of the identifying pilot signal but by detecting a synchronizing pattern of an encoded signal of the PCM audio signal.

Referring now to the drawings, the present invention will hereinafter be described in detail.

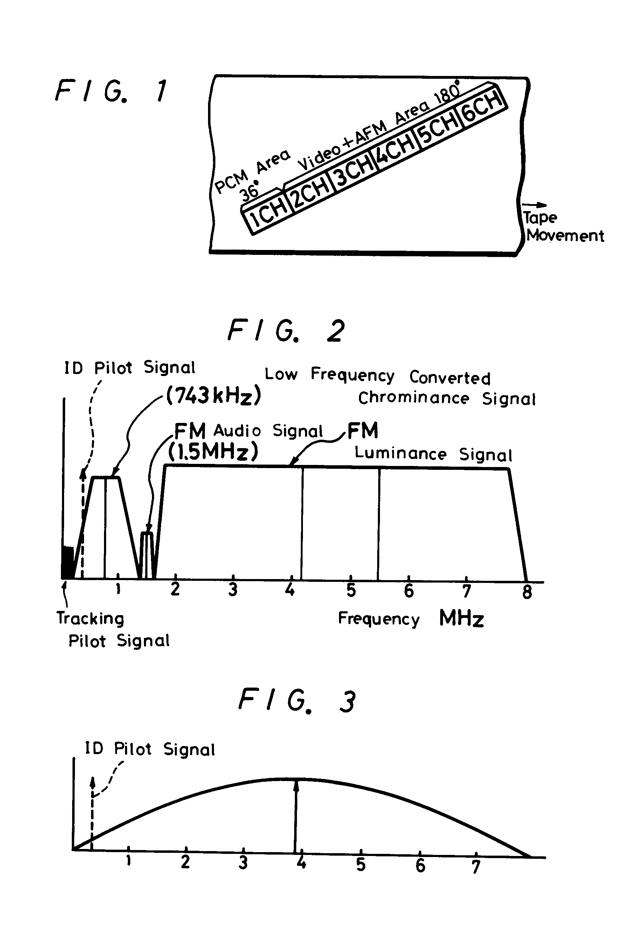

Fig. 1 shows a tape format recorded on a tape of an 8 mm video tape recorder to which the present invention is applied. As is well known, the recording format formed on a track by the video tape recoder of this type comprises an interval or area of video signal area and an audio frequency modulated (AFM) signal area corresponding to 180° in a rotation angle of a rotary head and an area of a PCM audio signal of 36°. In this case, the video + AFM area is further divided equally by 5 and this 8 mm video tape recorder can be used as a multi-channel PCM tape recorder of totally 6 channels.

When the 8 mm video tape recorder is used as a video tape recorder, as shown in a diagram of a signal band in Fig. 2, an FM (frequency modulated) luminance signal (having a frequency deviation ranging from 4.2 to 5.4 MHz) and a low frequency converted chrominance signal having a frequency of 743 kHz are recorded with their signal bands separated, and an FM audio singal having a frequency of 1.5 MHz is inserted into a portion between these bands. Further, a 4-frequency system tracking pilot signal is inserted into the signal band between 100 and 150 kHz.

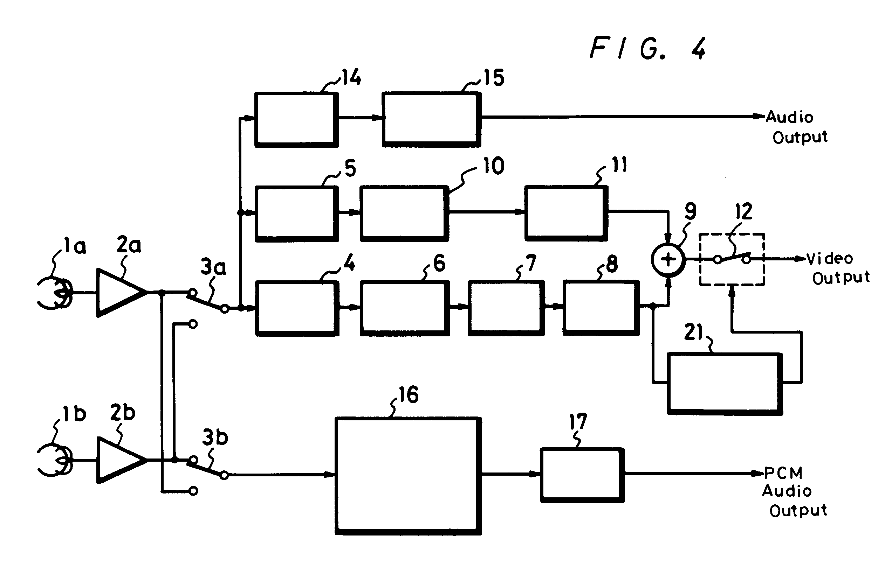

Fig. 3 is a frequency spectrum diagram showing a signal band when the 8 mm video tape recorder is used as the multi-channel PCM tape recorder. As seen in Fig. 3, this signal band covers a wide signal band ranging from several kHz to several MHz. In order to discrimiate the tape on which the PCM audio signal is recorded in the multi-PCM mode from that of the video signal, the identifying pilot signal having the frequency of 228.7 kHz is frequency multiplexed therewith. The frequency of this identifying pilot signal is overlapped with a lower side band of the low frequency converted chrominance signal in the tape which is recorded when the 8 mm video tape recorder is used as the VTR.

Fig. 4 is a circuit block diagram showing a signal reproducing system of the 8 mm video tape recorder to which this invention is applied.

Referring to Fig. 4, output signals reproduced by first and second rotary heads 1a and 1b are respectively supplied through pre-amplifiers 2a and 2b to change-over switches 3a and 3b, by which the gathering of the multi-channel signals and the signal distribution thereof to the video signal reproducing system and to the PCM audio signal reproducing system are carried out.

In the video signal reproducing system, the reproduced video signal is separated to a luminance signal and a chrominance signal by an Y filter 4 and a C filter 5. The luminance signal from the Y filter 4 is supplied through a limiter 6 to a demodulator 7 and thereby demodulated. The demodulated signal from the demodulator 7 is supplied to a de-emphasis circuit 8 in which it is corrected in high frequency band and then supplied to an adder 9. On the other hand, the chrominance signal from the C filter 5 is converted to a signal having a frequency of 3.58 MHz by a frequency converter 10 and then supplied through a high pass filter 11 to the adder 9 in which it is combined with the luminance signal and then delivered through a muting switch 12 (or a cut-off switch) as a reproduced video signal.

Further, an FM audio signal AFM inserted to the intermediate portion between the FM luminance signal band and the chrominance signal band is separated by an AFM filter 14, demodulated by an AFM demodulator 15 and then delivered as a reproduced audio signal.

A reproduced PCM audio signal from the change-over switches 3a and 3b is demodulated by a PCM decoder 16, converted to an analog audio signal by a D/A (digital-to-analog) converter 17 and then delivered as the analog audio signal.

Subsequently, the output signal from the de-emphasis circuit 8 in the luminance signal reproducing system is supplied to a video signal detecting circuit 21 which detects whether or not a synchronizing signal SYNC exists in the video signal.

When the tape recorded in the multi-PCM mode is reproduced, the number of the synchronizing signals SYNC per one track is counted. When the counted number of the synchronizing signals SYNC is less than a normal number (256), the output signal from the detecting circuit 21 becomes high in level. When the level of the output signal from the detecting circuit 21 becomes high, the muting switch 12 is placed in the muting state (to cut off or mute the monitor picture).

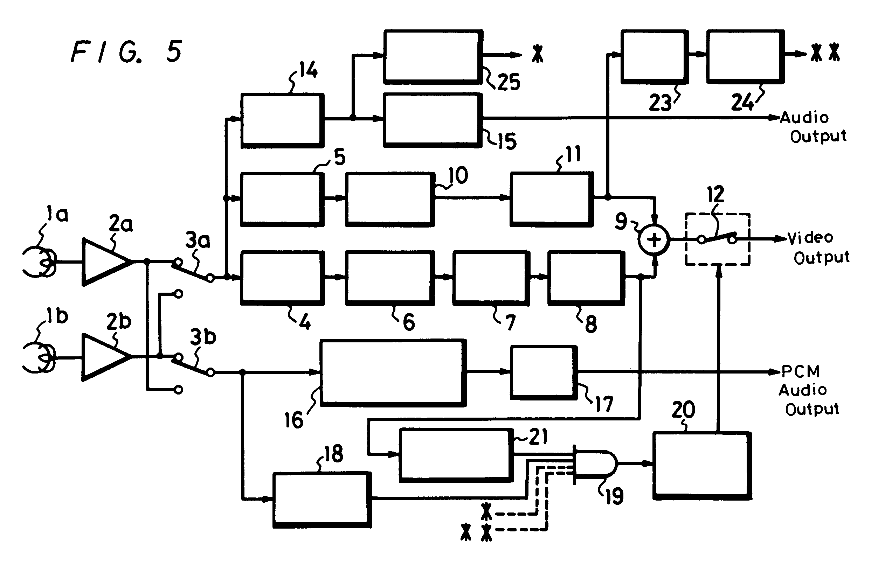

Fig. 5 is a circuit block diagram showing another embodiment of the reproducing system according to the present invention. In Fig. 5, like parts corresponding to those of Fig. 4 are marked with the same references and will not be described in detail because they have the similar functions.

Referring to Fig. 5, the reproduced PCM audio signal from the change-over switches 3a and 3b is supplied to the PCM decoder 16 and also to a PCM identifying circuit 18. The output signal from this identifying circuit 18 and the output signal from the detecting circuit 21 are both supplied to an AND circuit 19.

When this identifying circuit 18 identifies the reproduced multi-PCM audio signal, the output signal of the identifying circuit 18 becomes high in level, while when the detecting circuit 21 does not detect the synchronizing signal SYNC in the video signal, the output signal of the detecting circuit 21 becomes high in level. Accordingly, when both the output signals of the identifying circuit 18 and the detecting circuit 21 are high in level, the AND circuit 19 produces the output signal of high level.

The output signal from the AND circuit 19 is delivered to a several-field detecting means 20. When the output signal of the AND circuit 19 becomes high in level over several field periods continuously, the detecting means 20 produces an output signal having a high level by which the muting switch 12 is controlled so as to be placed in the muting state to mute the video signal.

As mentioned above, when the pilot signal of the multi-PCM audio signal is deteced over several field periods and the video signal is not detected over several field periods continuously, it is judged that the tape is recorded in the multi-channel PCM mode. Thus, the monitor picture is cut off (muted).

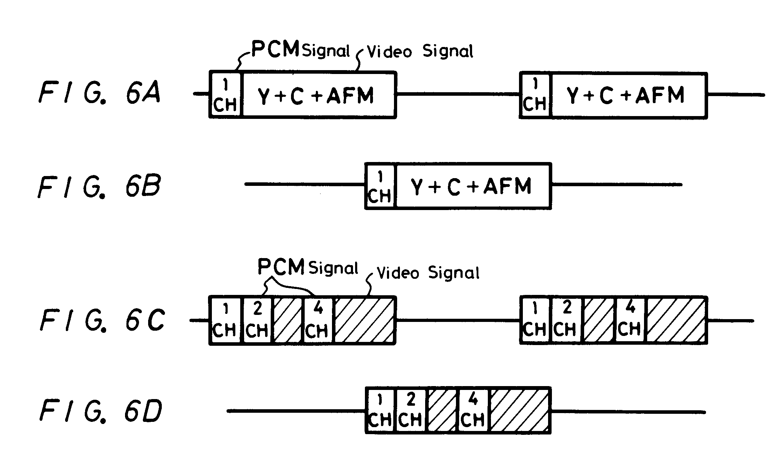

In this way, as shown in Figs. 6A and 6B, when the multi-PCM audio signal of 1CH, 2CH and 4CH is recorded, as shown in Figs. 6C and 6D, on the tape on which the normal PCM audio signal and the video signal are recorded as shown in Figs. 6A and 6B and then reproduced, it is appreciated that the monitor picture can be cut off (muted) precisely.

Further, alternatively, as the means for detecting a video signal, it is possible to detect the presence or absence of the FM audio signal which is recorded together with the video signal.

This version of the detecting means will be described with reference to Fig. 5. When the video signal passed through the switch 3a is supplied to the AFM filter 14, only the AFM signal is passed therethrough. Accordingly, whether or not the AFM signal is correct is judged by an AFM detecting circuit 25 and the detected output from the AFM detecting circuit 25 is supplied to the AND circuit 19.

Furthermore, as the means for detecting the video signal, such a version is possible: a burst signal contained in the video signal is supplied to a band pass filter 23 and thereby extracted. Then, the extracted output signal from the band pass filter 23 is supplied to a burst signal judging means 24 which judges whether or not the burst signal is correct. The judged output from the burst signal judging means 24 is supplied to the AND circuit 19.

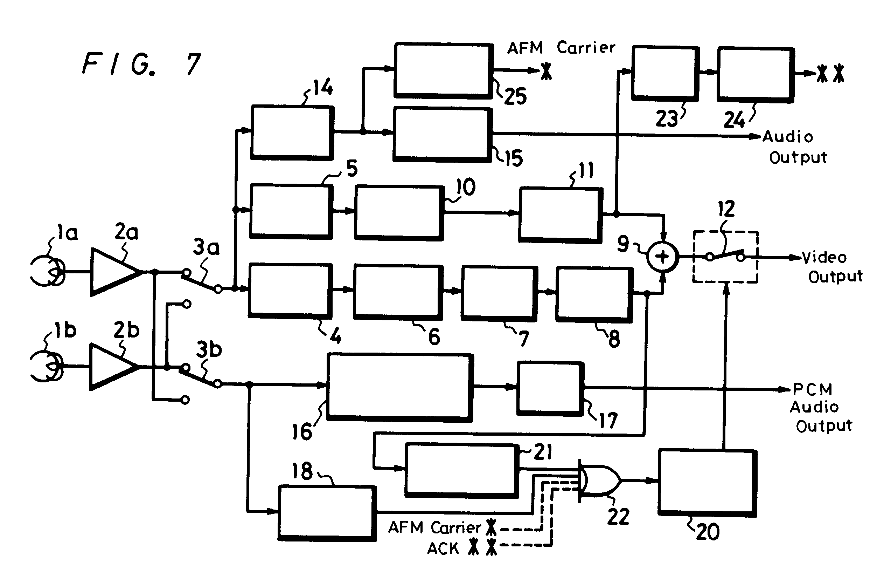

Fig. 7 is a circuit block diagram showing further embodiment of the reproducing system according to the present invention. In Fig. 7, like parts corresponding to those of Figs. 4 and 5 are marked with the same references and will not be described.

In this embodiment as shown in Fig. 7, the output signal from the video signal detecting means 21 and the output signal from the PCM judging circuit 18 are both supplied through an OR circuit 22 to the several-field detecting circuit 20. Accordingly, when the absence of at least the video signal or the presence of the PCM audio signal is judged, the muting switch 12 is controlled so as be placed in the muting mode.

## Claims

1. Apparatus for reproducing an information signal comprising at least a digitized audio signal recorded in a plurality of successive tracks on a record medium, with the digitized audio signal being recorded in at least an overscan section of each track, said apparatus comprising

   transducer means (1a, 1b) for scanning the tracks to reproduce the information signal recorded in the plurality of successive tracks;

   audio signal processing means (16, 17) for converting said digitized audio signal to an analog audio signal;

video signal processing means (4 to 11) for processing a video signal of said information signal to produce an output video signal, said video signal being a composite color video signal having horizontal synchronising pulses and color burst signals;

switch means (3a, 3b) for supplying said information signal reproduced during scanning of the overscan section of each track to said audio signal processing means (16, 17) and for supplying said information signal during scanning a main section of each track to one of said audio signal processing means (16, 17) and said video signal processing means (4 to 11);

video signal detecting means (21, 23, 24) for detecting said video signal component included in said information signal reproduced during scanning of main section of each track; and

audio signal detecting means (18 to 22) for detecting said digitized audio signal included in said information signal produced during scanning of each track;

**characterized in that**

video signal muting means (12) are provided which mutes said output video signal produced from said video signal processing means (4 to 11) in response to the output signal of said video signal detecting means (21, 23, 24) and/or audio signal detecting means (18 to 22) during scanning of each track.

2. Apparatus according to claim 1, characterized in that said video signal muting means (12) mutes said output video signal produced from said video signal processing means (4 to 11) when said video signal detecting means (21) does not detect said video signal after scanning of each track during a plurality of successive tracks.

3. Apparatus according to claim 1 or 3, characterized in that said video signal muting means (12) mutes said output video signal produced from said video signal processing means (4 to 11) when said audio signal detecting means (18 to 22) detects said digitized audio signal included in said information signal reproduced after after scanning of each track during a plurality of successive tracks.

4. Apparatus according to any one of claim 1 to 3, characterized in that said video signal muting means (12) mutes said output video signal produced from said video signal processing means (4 to 11) in response to at least the output signal of said video signal detecting means (21; 23, 24) or audio signal detecting means (18 to 22) after scanning of each track during a plurality of successive tracks.

5. Apparatus according to any one of claim 1 to 4, characterized in that said video signal detecting means (21) detects said horizontal synchronizing pulses in said composite color video signal.

6. Apparatus according to any one of claim 1 to 4, characterized in that said video signal detecting means (23, 24) detects said color burst signals in said composite color video signal.

7. Apparatus according to any one of claim 1 to 6, characterized in that said information signal further has a carrier signal frequency-modulated with an input audio signal and said modulated carrier signal is frequency mixed with said video signal, and in that said apparatus further comprises:

frequency-modulated carrier detecting means (25) for detecting said modulated carrier signal,

whereby said video signal muting means (12) mutes said output video signal produced from said video signal processing means (8 to 11) in response to the output signal of said frequency-modulated carrier detecting means.

8. Apparatus according to any one of claim 1 to 7, characterized in that said information signal further has a pilot signal for identifying a recorded condition of said apparatus, and in that said apparatus further comprises:

pilot signal detecting means for detecting a pilot signal;

whereby said video signal muting means (12) mutes said output video signal produced from said video signal processing means (8 to 11) in response to the output signal of said pilot signal detecting means.

**Revendications**

1. Dispositif pour reproduire un signal d'information comprenant au moins un signal sonore mis sous forme numérique enregistré sur une pluralité de pistes successives d'un support d'enregistrement, le signal sonore numérique étant enregistré dans au moins une partie de surlecture de chaque piste, ledit dispositif comprenant

des moyens transducteurs (1a,1b) pour lire les pistes afin de reproduire le signal d'information enregistré sur la pluralité des pistes successives;

des moyens de traitement de signaux sonores (16,17) pour convertir ledit signal sonore numérique en un signal sonore analogique;

des moyens de traitement de signaux vidéo (4 à 11) pour traiter un signal vidéo dudit signal d'information afin de produire un signal vidéo de sortie, ledit signal vidéo étant un signal vidéo de chrominance composite comportant des impulsions de synchronisation horizontale et des signaux salves de chrominance;

des moyens commutateurs (3a,3b) pour fournir ledit signal d'information reproduit pendant la lecture de la partie de surlecture de chaque piste auxdits moyens de traitement de signaux sonores (16,17) et pour fournir ledit signal d'information pendant la lecture d'une partie principale de chaque piste à un desdits moyens de traitement de signaux sonores (16,17) et desdits moyens de traitement de signaux vidéo (4 à 11);

des moyens détecteurs de signaux vidéo (21,23,24) pour détecter ladite composante de signal vidéo incluse dans ledit signal d'information reproduit pendant la lecture de la partie principale de chaque piste; et

des moyens détecteurs de signaux sonores (18 à 22) pour détecter ledit signal sonore numérique inclus dans ledit signal d'information produit pendant la lecture de chaque piste; caractérisé en ce que

un moyen de masquage de signaux vidéo (12) est prévu pour masquer ledit signal vidéo de sortie produit par lesdits moyens de traitement de signaux vidéo (4 à 11) en réponse au signal de sortie desdits moyens détecteurs de signaux vidéo (21,23,24) et/ou des moyens détecteurs de signaux sonores (18 à 22) pendant la lecture de chaque piste.

2. Dispositif selon la revendication 1, caractérisé en ce que ledit moyen de masquage de signaux vidéo (12) masque ledit signal vidéo de sortie produit par lesdits moyens de traitement de signaux vidéo (4 à 11) quand lesdits moyens détecteurs de signaux vidéo (21) ne détectent pas ledit signal vidéo après la lecture de chaque piste d'une pluralité de pistes successives.

3. Dispositif selon l'une quelconque des revendications 1 et 2, caractérisé en ce que ledit moyen de masquage de signaux vidéo (12) masque ledit signal vidéo de sortie produit par lesdits moyens de traitement de signaux vidéo (4 à 11) quand lesdits moyens détecteurs de signaux sonores (18 à 22) détectent ledit signal sonore numérique inclus dans ledit signal d'information reproduit après la lecture de chaque piste d'une pluralité de pistes successives.

4. Dispositif selon l'une quelconque des revendications 1 à 3, caractérisé en ce que ledit moyen de masquage de signaux vidéo (12) masque ledit signal vidéo de sortie produit par lesdits moyens de traitement de signaux vidéo (4 à 11) en réponse à au moins le signal de sortie desdits moyens détecteurs de signaux vidéo (21;23,24) ou desdits moyens détecteurs de signaux sonores (18 à 22) après la lecture de chaque piste d'une pluralité de pistes successives.

5. Dispositif selon l'une quelconque des revendications 1 à 4, caractérisé en ce que lesdits moyens détecteurs de signaux vidéo (21) détectent lesdites impulsions de synchronisation horizontale dans ledit signal vidéo de chrominance composite.

6. Dispositif selon l'une quelconque des revendications 1 à 4, caractérisé en ce que lesdits moyens détecteurs de signaux vidéo (23,24) détectent lesdits signaux salves de chrominance dans ledit signal vidéo de chrominance composite.

7. Dispositif selon l'une quelconque des revendications 1 à 6, caractérisé en ce que ledit signal d'information comporte en outre un signal porteur modulé en fréquence avec un signal sonore d'entrée et ledit signal porteur modulé est mélangé en fréquence avec ledit signal vidéo, et en ce que ledit dispositif comprend en outre:

un moyen détecteur de signaux porteurs modulés en fréquence (25) pour détecter ledit signal porteur modulé,

ledit moyen de masquage de signaux vidéo (12) masquant ainsi ledit signal vidéo de sortie produit par lesdits moyens de traitement de signaux vidéo (8 à 11) en réponse au signal de sortie desdits moyens détecteurs de signaux porteurs modulés en fréquence.

8. Dispositif selon l'une quelconque des revendications 1 à 7, caractérisé en ce que ledit signal d'information comporte en outre un signal pilote pour identifier un état enregistré dudit dispositif, et en ce que ledit dispositif comprend en outre:

un moyen détecteur de signaux pilotes pour détecter un signal pilote;

ledit moyen de masquage de signaux vidéo (12) masquant ainsi ledit signal vidéo de sortie produit par lesdits moyens de traitement de signaux vidéo (8 à 11) en réponse au signal de sortie dudit moyen détecteur de signaux pilotes.

## Patentansprüche

1. Vorrichtung zur Wiedergabe eines Informationssignals mit zumindest einem digitalisierten in mehreren aufeinanderfolgenden Spuren auf einem Aufnahmemedium aufgenommenen Audiosignal, wobei das digitalisierte Audiosignal in zumindest eine: Über-Abtastbereich jeder Spur aufgenommen ist, umfassend;

eine Umformungseinrichtung (1a,1b) zum Abtasten der Spuren, um das in mehreren aufeinanderfolgenden Spuren aufgenommene Informationssignal wiederzugeben;

eine Audiosignalverarbeitungseinrichtung (16,17) zum Umsetzen des digitalisierten Audiosignals in ein analoges Audiosignal;

eine Videosignalverarbeitungseinrichtung (4-11) zum Verarbeiten eines Videosignals des Informationssignals, um ein Ausgangsvideosignal zu erzeugen, wobei das Videosignal ein Farbbild-Videosignalgemisch mit Horizontalsynchronisationsimpulsen und Farbburstsignalen ist;

eine Umschalteinrichtung (3A,3B), die das während der Abtastung des Über-Abtastbereichs jeder Spur wiedergegebene Informatiossignal der Audiosignalverarbeitungseinrichtung (16,17) zuführt und die das während der Abtastung eines Hauptbereichs jeder Spur wiedergegebene Informationssignal einem von Audiosignalverarbeitungseinrichtung (16,17) und Videosignalverarbeitungseinrichtung (4-11) zuführt;

eine Videosignalerkennungseinrichtung (21,23,24) zum Erkennen der Videosignalkomponente, die in dem während dem Abtasten des Hauptbereichs jeder Spur wiedergegebenen Informationssignal enthalten ist; und

eine Audiosignalerkennungseinrichtung (18-22) zum Erkennen des digitalisierten Audiosignals, das in dem während dem Abtasten jeder Spur erzeugten Informationssignal enthalten ist,

dadurch **gekennzeichnet,** daß

eine Videosignaldämpfungseinrichtung (12) vorhanden ist, die das von der Videosignalverarbeitungseinrichtung (4-11) erzeugte Ausgangsvideosignal abhängig von dem Ausgangssignal der Videosignalerkennungseinrichtung (21,23,24) und/oder der Audiosignalerkennungsrichtung (18-22) während dem Abtasten jeder Spur dämpft.

2. Vorrichtung nach Anspruch 1, dadurch **gekennzeichnet,** daß die Videosignaldämpfungseinrichtung (12) das von der Videosignalverarbeitungseinrichtung (4-11) erzeugte Ausgangsvideosignal dämpft, wenn die Videosignalerkennungseinrichtung (21) das Videosignal nach dem Abtasten jeder Spur während mehrerer aufeinanderfolgender Spuren erkennt.

3. Vorrichtung nach Anspruch 1 oder 3, dadurch **gekennzeichnet,** daß die Videosignaldämpfungseinrichtung (12) das von der Videosignalverarbeitungseinrichtung (4-11) erzeugte Ausgangsvideosignal dämpft, wenn die Audiosignalerkennungseinrichtung (18-22) das digitalisierte Audiosignal erkennt, das in dem nach dem Abtasten jeder Spur während mehrerer aufeinanderfolgender Spuren wiedergegebenen Informationssignal enthalten ist.

4. Vorrichtung nach einem der Ansprüche 1 bis 3, dadurch **gekennzeichnet,** daß die Videosignaldämpfungseinrichtung (12) das von der Videosignalverarbeitungseinrichtung (4-11) erzeugte Ausgangsvideosignal abhängig von zumindest dem Ausgangssignal der Videosignalerkennungseinrichtung (21;23,24) oder der Audiosignalerkennungseinrichtung (18-22) nach dem Abtasten jeder Spur während mehrerer aufeinanderfolgender Spuren dämpft.

5. Vorrichtung nach einem der Ansprüche 1 bis 4, dadurch **gekennzeichnet,** daß die Videosignalerkennungseinrichtung (21) die Horizontalsynchronisationsimpulse in dem Farbbild-Videosignalgemisch erkennt.

6. Vorrichtung nach einem der Ansprüche 1 bis 4, dadurch **gekennzeichnet,** daß die Videosignalerkennungseinrichtung (23,24) die Farbburstsignale in dem Farbbild-Videosignalgemisch erkennt.

7. Vorrichtung nach einem der Ansprüche 1 bis 6, dadurch **gekennzeichnet,** daß das Informationssignal desweiteren ein mit einem Eingangsaudiosignal frequenzmoduliertes Trägersignal aufweist und das modulierte Trägersignal mit dem Videosignal frequenzgemischt ist, und daß die Vorrichtung desweiteren umfaßt;

eine Frequenzmodulationsträger-Erkennungseinrichtung (25) zum Erkennen des modulierten Trägersignals, wobei die Videosignaldämpfungseinrichtung (12) das von der Videosignalverarbeitungseinrichtung (8-11) erzeugte Ausgangsvideosignal abhängig von dem Ausgangssignal der Frequenzmodulationsträger-Erkennungseinrichtung dämpft.

8. Vorrichtung nach einem der Ansprüche 1 bis 7,
dadurch **gekennzeichnet,**
daß das Informationssignal weiterhin ein Pilotsignal zur Identifikation einer Aufnahmebedingung der Vorrichtung umfaßt, und daß die Vorrichtung desweiteren umfaßt:
eine Pilotsignal-Erkennungseinrichtung zum Erkennen eines Pilotsignals, wobei die Videosignaldämpfungseinrichtung (12) das von der Videosignalverarbeitungseinrichtung (8-11) erzeugte Ausgangsvideosignal abhängig von dem Ausgangssignal der Pilotsignalerkennungseinrichtung dämpft.

FIG. 1

PCM Area 36°  Video+AFM Area 180°  1CH 2CH 3CH 4CH 5CH 6CH

Tape Movement

FIG. 2

ID Pilot Signal

(743 kHz)

Low Frequency Converted Chrominance Signal

FM Audio Signal (1.5MHz)

FM Luminance Signal

1  2  3  4  5  6  7  8

Tracking Pilot Signal

Frequency   MHz

FIG. 3

ID Pilot Signal

1  2  3  4  5  6  7

F I G. 4

FIG. 5

EP 0 208 931 B1

FIG. 6A

PCM Signal / Video Signal

| 1 CH | Y + C + AFM | 1 CH | Y + C + AFM |

FIG. 6B

| 1 CH | Y + C + AFM |

FIG. 6C

PCM Signal / Video Signal

| 1 CH | 2 CH | | 4 CH | | 1 CH | 2 CH | | 4 CH | |

FIG. 6D

| 1 CH | 2 CH | | 4 CH | |

F I G. 7

Video Output

PCM Audio Output

Audio Output

AFM Carrier

AFM Carrier

ACK